# EUROPEAN PATENT APPLICATION

(11) **EP 1 096 157 A2**
(43) Date of publication of application: **02.05.2001**
(21) Application number: 00309316.8
(22) Date of filing: 23.10.2000
(51) Int. Cl.: F16B 7/04

(54) **Two-part clamp**

(30) Priority: 26.10.1999 GB 9925182
(71) Applicant: Crisp Clean Services Limited, Langport, Somerset TA10 0PR (GB)
(72) Inventor: Crisp, John, Langport, Somerset TA10 9EZ (GB)
(74) Representative: Craske, Stephen Allan

(57) **Abstract**

A pair of metal components 2, 3 have first and second pairs of hemi-cylindrical clamp elements 4 and 6 joined by plates 5. At least one of the clamp elements has a dovetail-shaped head 9 which locates in a corresponding notch 8 in the other element. The components are held together by a screw 12 and can be easily assembled to hold a second elongate member 11 alongside a first 10.

## Description

### TECHNICAL FIELD OF THE INVENTION

This invention relates to clamps for attachment to an elongate element, e.g. the frame of a cleaning trolley.

### BACKGROUND

In many situations it is necessary to firmly attach something to an elongate element in such a way that it can easily and quickly be attached and removed. For example, in the case of a cleaning trolley, a variety of articles are frequently attached to the framework of the trolley, e.g. buckets, tool holders or warning flags.

Existing clamps which are available for the purpose generally require two fixing screws and can often move before the screws are fully tightened.

An additional requirement is dictated by the fact that there is often little space available in the desired position in which to fit a clamp.

The present invention seeks to provide a new and inventive form of clamp.

### SUMMARY OF THE INVENTION

The present invention proposes a two-part clamp for attachment to an elongate member, said parts comprising a pair of conjoined substantially hemi-cylindrical clamp elements for embracing said member, and a pair of opposed plates project from an adjacent pair of edges of the conjoined clamp elements, said parts being held together by one or more screws inserted through the plates, in which the second pair of adjacent edges of said clamp elements is provided, on one of said edges, with a notch which receives a head which projects from the adjacent edge of the other element.

Preferably the outer surfaces of the head and of the two elements substantially lie on a common cylinder.

The head may for example be T-shaped but is preferably substantially dovetail-shaped since the divergent edges of a dovetail-shaped head tend to form an increasingly tight engagement as the clamp is tightened.

The plates may carry a second pair of part-cylindrical clamp elements for embracing and holding a second member alongside the first member.

The second pair of clamp elements preferably have an opposed pair of adjacent radial edges which are provided, on one of said edges, with a notch which receives a head which projects from the adjacent edge of the other element, and the outer surfaces of the head and of the two elements substantially lie on a common cylinder. Said head is preferably substantially dovetail-shaped.

### BRIEF DESCRIPTION OF THE DRAWINGS

The following description and the accompanying drawings referred to therein are included by way of non-limiting example in order to illustrate how the invention may be put into practice. In the drawings:
Figure 1 is a side view of a clamp in accordance with the invention;
Figure 2 is a plan view of the clamp;
Figure 3 is an edge view of the clamp looking from the left in Fig. 1,
Figure 4 is a side view of a modified form of the clamp;
Figure 5 is a plan view of the clamp of Fig. 4; and
Figure 6 is an edge view of the same clamp looking from the right in Fig. 4,

### DETAILED DESCRIPTION OF THE DRAWINGS

Referring firstly to Fig.s 1 to 3, the clamp 1 comprises a pair of components 2 and 3 which may conveniently be stamped from a sheet of stainless steel or other metal. The two components are substantially identical except as explained below.

Each component comprises a hemi-cylindrical section 4 having an inside diameter of e.g. 22 or 19 mm, with an integral plate 5 projecting radially from one edge. The opposite edge of the plate is formed into a further part-cylindrical section 6, typically having an internal diameter of (by way of example) 8 mm. The opposite edges of the sections 6 may abut or be separated by a small gap 7, as shown.

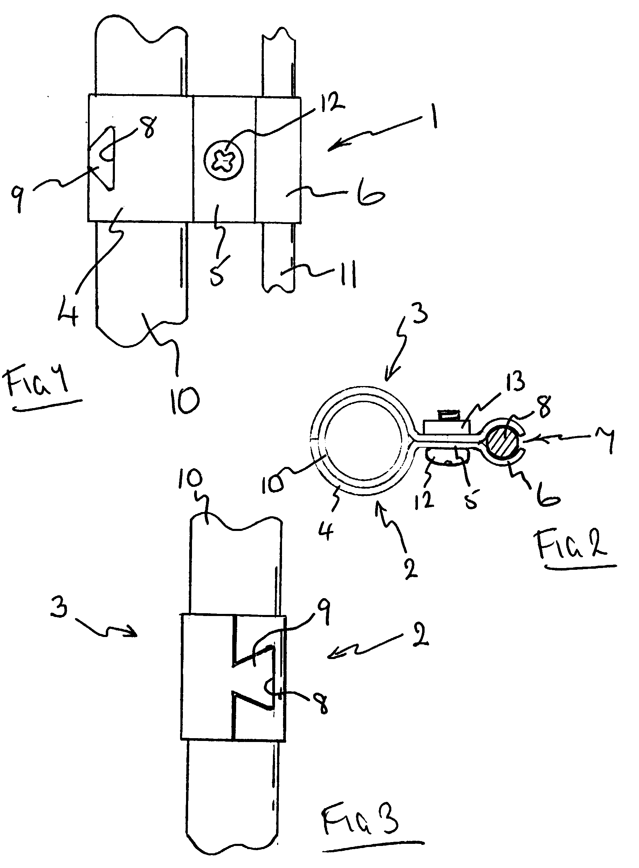

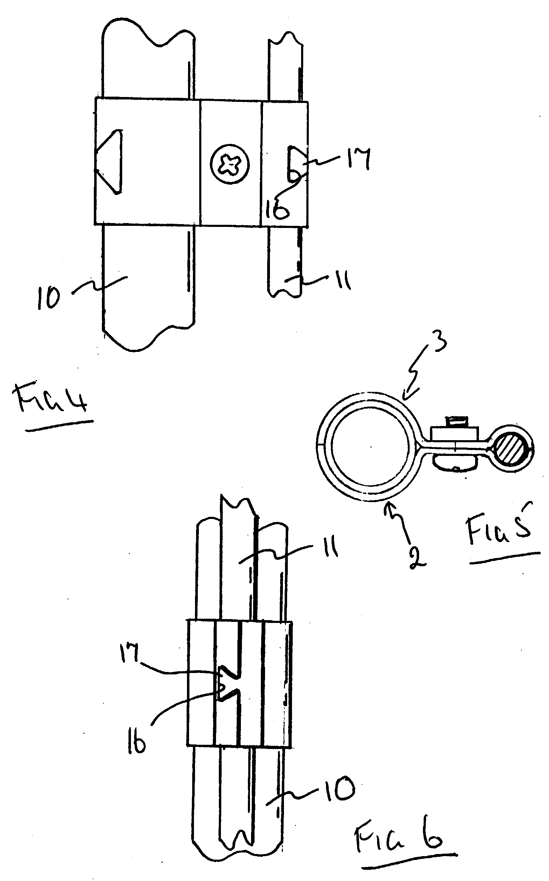

One of the free axial edges of one of the sections 4 is provided with a dovetail-shaped notch 8. The corresponding edge of the other component 3 is formed with an integral dovetail-shaped head 9, stamped from sheet metal, which is closely received in the notch 8. The head 9 is formed on a common circle with the elements 4 so that the head does not project when viewed as in Fig. 2.

The clamp can be attached to an elongate tubular member 10 such as the fame of a cleaning trolley, by placing the sections 4 around the member as shown. A smaller diameter rod 11, e.g. carrying a warning flag, can be inserted between the second sections 6. The plates 5 are clamped together by a screw 12 and a nut 13, which may be fixed to one of the plates 5 or loose, preferably with a locking washer. When the components are pressed together, even using light finger pressure, the dovetail head 9 has a wedging action with the notch 8 so that the sections 4 firmly grip the member 10 without risk of displacement. Furthermore, as the screw is tightened the sections 4 take an increasingly tight grip on the member 10. The second sections 6 grip the rod 11, which is thus secured parallel to the member 10.

If it is desired to remove the rod 11 for example, the screw 12 can be slackened considerably without risk of relative displacement of the two components 2 and 3 since the head acts rather like a hinge allowing the two components to pivot apart and prevents rotation of the components about the axis of the screw. Consequently, it will be appreciated that the operations of attaching the clamp and removing or slackening it can all be accomplished quickly and easily.

The embodiment shown in Fig.s 4 to 6 is similar to that described above except that the free edges of the two smaller diameter sections 6 are also provided with a similar dovetail-shaped notch 16 and head 17. In this case the two components form an increasingly tight grip on the rod 11 as well as the member 10 as the screw 12 is tightened, so that the clamp is somewhat more effective than that described above. However, when the screw is slackened, or even removed, the two components 2 and 3 cannot move apart, so that the clamp is only suitable for situations where both the member 10 and the rod 11 are straight and have a free end which can be inserted through the clamp.

It will be appreciated that the features disclosed herein may be present in any feasible combination. Whilst the above description lays emphasis on those areas which, in combination, are believed to be new, protection is claimed for any inventive combination of the features disclosed herein.

## Claims

1. A two-part clamp for attachment to an elongate member, characterised in that said parts (2, 3) have a pair of conjoined substantially hemi-cylindrical clamp elements (4) for embracing said member, a pair of opposed plates (5) project from an adjacent pair of edges of the conjoined clamp elements, and said parts are held together by one or more screws (12) inserted through the plates, in which the second pair of adjacent edges of said clamp elements is provided, on one of said edges, with a notch (8) which receives a head (9) which projects from the adjacent edge of the other element.

2. A clamp according to Claim 1, in which the outer surfaces of the head and of the two clamp elements substantially lie on a common cylinder.

3. A clamp according to Claim 1 or 2, in which the head is substantially dovetail-shaped.

4. A clamp according to any preceding claim, in which the plates carry a second pair of part-cylindrical clamp elements (6) for embracing and holding a second member alongside the first member.

5. A clamp according to Claim 4, in which the second pair of clamp elements have an opposed pair of adjacent radial edges which are provided, on one of said edges, with a notch 16) which receives a head (17) which projects from the adjacent edge of the other element.

6. A clamp according to Claim 5, in which the outer surfaces of the second pair of clamp elements the respective head substantially lie on a common cylinder.

7. A clamp according to Claim 5 or 6, in which the head of the second pair of clamp elements is substantially dovetail-shaped.
